(19)

**Europäisches Patentamt**

**European Patent Office**

**Office européen des brevets**

(11)  **EP 2 755 174 A1**

(12)  **EUROPEAN PATENT APPLICATION**

(43) Date of publication:
16.07.2014  Bulletin 2014/29

(51) Int Cl.:
**G06Q 10/06** [(2012.01)]

(21) Application number: **13194543.8**

(22) Date of filing: **27.11.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Yokoyama, Yuka**<br>  **Kobe-shi, Hyogo 651-0072 (JP)**<br>• **Yoshino, Masafumi**<br>  **Kobe-shi, Hyogo 651-0072 (JP)** |
| (30) Priority: **11.12.2012  JP 2012270187** | (74) Representative: **Manitz, Finsterwald & Partner GbR**<br>**Martin-Greif-Strasse 1**<br>**80336 München (DE)** |
| (71) Applicant: **SUMITOMO RUBBER INDUSTRIES, LTD.**<br>**Kobe-shi, Hyogo-ken, 651-0072 (JP)** | |

(54)  **Method for manufacturing polymer**

(57)  A method for manufacturing a polymer includes the steps of:

(1) deciding an upper limit of a budget;

(2) deciding an amount of a non-fossil resource-derived monomer and an amount of a fossil resource-derived monomer such that utility is optimized in a range where a cost does not exceed the upper limit, by using a function that includes a total monomer amount and a utility index of the non-fossil resource-derived monomer as constants and includes the amount of the non-fossil resource-derived monomer and the amount of the fossil resource-derived monomer as variables; and

(3) polymerizing the non-fossil resource-derived monomer and the fossil resource-derived monomer.

EP 2 755 174 A1

## Description

This application claims priority on Patent Application No. 2012-270187 filed in JAPAN on December 11, 2012. The entire contents of this Japanese Patent Application are hereby incorporated by reference.

BACKGROUND OF THE INVENTION

Field of the Invention

The present invention relates to methods for manufacturing a polymer. Specifically, the present invention relates to methods for manufacturing a polymer obtained by polymerization of a fossil resource-derived monomer and a non-fossil resource-derived monomer.

Description of the Related Art

Fossil resources such as petroleum, natural gas, and the like are used as energy. In addition, the fossil resources are raw materials for various chemical products. Polymers such as synthetic rubbers, synthetic resins, and the like are obtained by a polymerization reaction of a monomer manufactured from petroleum.

The reserves of the fossil resources are limited. The supplied amounts of the fossil resources have been decreasing year by year. Increases in the prices of the fossil resources are expected in the future.

There are growing concerns about adverse effects of the global warming on the ecosystem. The greatest cause for the global warming is rises in the atmospheric concentrations of greenhouse gases such as carbon dioxide gas and methane gas. The main cause for the concentration rises is emission of greenhouse gases by burning of fossil resources. The United Nations, countries, and municipalities are working to control emission of greenhouse gases.

When hydrocarbons obtained by plant photosynthesis are burnt, it does not influence the atmospheric concentration of carbon dioxide gas. This concept is referred to as "carbon neutral". Greenhouse gas reduction activities for compensating for emission of greenhouse gases have also been carried out. One example of the reduction activities is tree planting. The activities are referred to as "carbon offset".

Recent smart consumers have found worthiness in products that are manufactured in an effort to preserve the global environment. This effort is also a determinant for intention to buy a product, similarly to quality, price, and the like. The support systems for buying products manufactured in this effort have also been established. For example, in Japan, the Law on Promoting Green Purchasing and the Biofuel law of Agriculture, Forestry, and Fisheries have been established. Moreover, in Japan, the green investing tax reduction system and the eco-car tax reduction system have been established.

Development of materials that replace petrochemical products has been diligently carried out. JP2003-63206 (US2003/0100661, US2005/0236084, and US2007/0240610) discloses a tire in which a natural rubber is used instead of a synthetic rubber, an inorganic filler or a bio-filler is used instead of carbon black, a vegetable oil is used instead of a petroleum-derived oil, and natural fibers are used instead of synthetic fibers. In the tire, the proportion of non-fossil resource-derived materials is equal to or greater than 75%.

It has been attempted to synthesize chemicals from biomass. WO 2012/051503 discloses a chemical synthesized from biomass. The chemical is blended into a rubber composition.

It has also been attempted to replace fossil resource-derived monomers that are raw materials for synthetic rubbers, synthetic resins, and the like, with non-fossil resource-derived monomers. For example, a monomer can be obtained by conversion of bioethanol. A non-fossil resource-derived monomer has a merit that it has a less adverse effect on the global environment at its manufacturing stage.

General non-fossil resource-derived monomers are expensive as compared to fossil resource-derived monomers. Furthermore, biomass such as corn competes with food. Thus, use of a monomer, which is derived from bioethanol derived from an edible raw material (food competitive biomass), during a period of food shortage is not preferred.

It is not easy to determine whether to use a non-fossil resource-derived monomer as a raw material for a polymer. In the case where a non-fossil resource-derived monomer and a fossil resource-derived monomer are used as raw materials for a polymer, it is also not easy to decide a ratio (i.e., a polymerization ratio) between the non-fossil resource-derived monomer and the fossil resource-derived monomer.

An object of the present invention is to provide a polymer having excellent utility and obtained at an appropriate cost.

SUMMARY OF THE INVENTION

A method for manufacturing a polymer according to the present invention includes the steps of:

(1) deciding an upper limit of a budget;
(2) deciding an amount of a non-fossil resource-derived monomer and an amount of a fossil resource-derived monomer such that utility is optimized in a range where a cost does not exceed the upper limit, by using a function that includes a total monomer amount and a utility index of the non-fossil resource-derived monomer as constants and includes the amount of the non-fossil resource-derived monomer and the amount of the fossil resource-derived monomer as variables; and
(3) polymerizing the non-fossil resource-derived monomer and the fossil resource-derived monomer.

According to another aspect, a method for manufacturing a polymer product according to the present invention includes the steps of:

(1) deciding an upper limit of a budget;
(2) deciding an amount of a non-fossil resource-derived monomer and an amount of a fossil resource-derived monomer such that utility is optimized in a range where a cost does not exceed the upper limit, by using a function that includes a total monomer amount and a utility index of the non-fossil resource-derived monomer as constants and includes the amount of the non-fossil resource-derived monomer and the amount of the fossil resource-derived monomer as variables;
(3) polymerizing the non-fossil resource-derived monomer and the fossil resource-derived monomer to obtain a polymer; and
(4) molding a molded article from a composition including the polymer.

According to still another aspect, a system for deciding a polymerization ratio according to the present invention includes:

(1) an input device for inputting an upper limit of a budget and a total monomer amount; and
(2) a computing device for deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

According to still another aspect, a method for deciding a polymerization ratio according to the present invention includes the steps of:

(1) inputting an upper limit of a budget and a total monomer amount from an input device; and
(2) a computing device deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

According to still another aspect, a program according to the present invention causes a computer to execute the steps of:

(1) inputting an upper limit of a budget and a total monomer amount from an input device; and
(2) a computing device deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

The polymer according to the present invention has excellent utility. The polymer can be obtained at an appropriate cost.

BRIEF DESCRIPTION OF THE DRAWINGS

FIG. 1 is a conceptual diagram showing a system according to one embodiment of the present invention together with a network;

FIG. 2 is a flowchart showing a method for deciding a polymerization ratio by using the system in FIG. 1;

FIG. 3 is a flowchart showing the details of a step of acquiring data indicating a social element in the method in FIG. 2; and

FIG. 4 is a partial front view of a screen of a monitor.

## DESCRIPTION OF THE PREFERRED EMBODIMENTS

The following will describe in detail the present invention, based on preferred embodiments with reference to the accompanying drawings.

A polymer according to the present invention is obtained by a polymerization reaction of a monomer. A preferable monomer has double bonds between carbons. Specific examples of the monomer include olefins such as ethylene, propylene, 1-butene, 2-butene, and isobutene; conjugated dienes such as 1,3-butadiene, 1,3-pentadiene, and isoprene; and aromatic vinyl compounds such as styrene, hydroxystyrene, and methoxystyrene. The polymer may be obtained by copolymerization of two or more monomers.

Monomers can be roughly classified into non-fossil resource-derived monomers and fossil resource-derived monomers. Examples of fossil resource-derived monomers include petroleum-derived monomers and natural gas-derived monomers. Non-fossil resource-derived monomers are also referred to as "environment-adaptive monomers". The adverse effects of production of non-fossil resource-derived monomers on the global environment are less than those of fossil resource-derived monomers.

Typical non-fossil resource-derived monomers are biomass-derived monomers. A monomer may be obtained from biomass obtained directly from a natural resource. A monomer may be obtained from biomass produced by converting a natural resource. Examples of the conversion include purification, extraction, and distillation. The conversion may be conducted with a catalyst. A monomer may be obtained by a reaction of two or more biomass-derived compounds.

A monomer may be obtained from food competitive biomass or non-food competitive biomass. Preferably, a monomer is obtained from non-food competitive biomass.

A monomer may be obtained by conversion of a fraction extracted from biomass. An example of the conversion is a chemical reaction. The conversion may be conducted by an organism.

A monomer may be obtained by conversion of a compound obtained by purifying a fraction extracted from biomass. An example of the conversion is a chemical reaction. The conversion may be conducted by an organism.

The conversion may be conducted by an organism that is not a gene recombinant, or by an organism that is a gene recombinant.

A monomer may be produced by artificial conversion of a compound produced by an organism. A monomer may be produced by an organism that is not a gene recombinant, or by an organism that is a gene recombinant.

Examples of biomass-derived monomers include monomers obtained by converting a biomass-derived intermediate by a microorganism, such as bioethanol and biobutanol. Other examples of biomass-derived monomers include monomers obtained by artificially converting the above biomass-derived intermediate with a metal catalyst. Still other examples of biomass-derived monomers include monomers obtained by converting sugars or celluloses by a microorganism. Still other examples of biomass-derived monomers include monomers isolated from a plant or an animal.

A monomer may be synthesized from a biomass-derived synthetic gas (syngas) by a microorganism, a plant, a metal catalyst, or the like.

Other examples of non-fossil resource-derived monomers include waste-derived monomers. The waste-derived monomers are obtained from industrial waste or household waste. The waste-derived monomers can be obtained from a chemical reaction or a reaction by an organism.

Still other examples of non-fossil resource-derived monomers include carbon monoxide gas-derived monomers and carbon dioxide gas-derived monomers. A monomer may be obtained from an exhaust gas.

A polymer is obtained by polymerization of a non-fossil resource-derived monomer and/or a fossil resource-derived monomer. Examples of the polymer include synthetic resins and synthetic rubbers. Examples of synthetic rubbers include butadiene rubber, styrene-butadiene rubber, isoprene rubber, butyl rubber, and modified products thereof.

A rubber composition is obtained by blending additives and a crosslinking agent such as sulfur into a synthetic rubber. Examples of additives include reinforcing agents such as silica and carbon black, crosslinking accelerators, coupling agents, softeners, processing aids, and the like. A polymer product is molded from the rubber composition. Examples of the polymer product include tires, hoses, drive belts, conveyor belts, shoe soles, buffers, rubber vibration isolators, rubber seismic isolators, and the like.

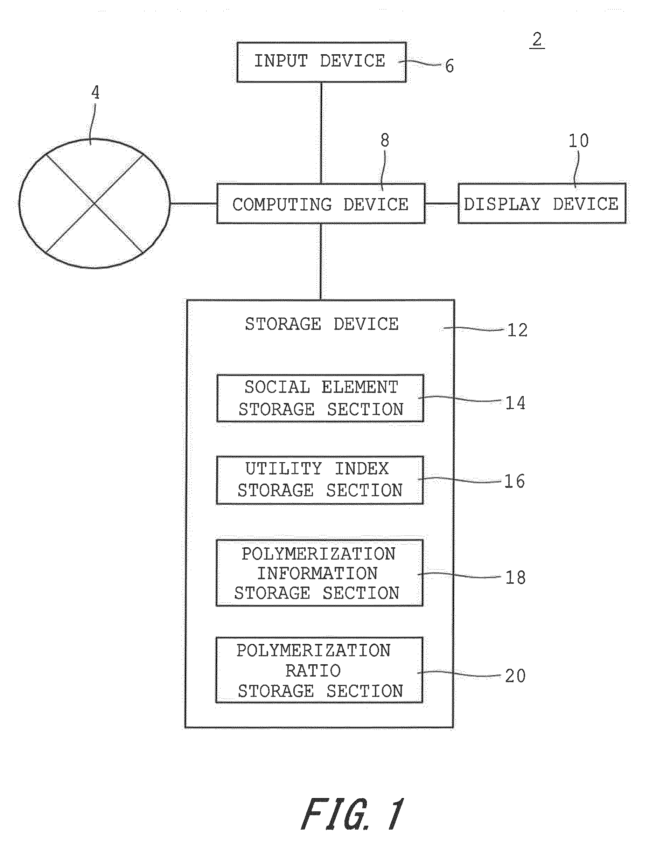

FIG. 1 shows a system 2 according to one embodiment of the present invention together with a network 4. A program according to the present invention is executed by the system 2. By the execution, a polymerization ratio between a non-fossil resource-derived monomer and a fossil resource-derived monomer is decided. In the present embodiment, a monomer derived from biomass that competes with food is used as the non-fossil resource-derived monomer. Typical biomass that competes with food is corn. Other examples of the biomass that competes with food include soybean, sugar cane, and sugar beet.

The system 2 includes an input device 6, a computing device 8, a display device 10, and a storage device 12. Specific examples of the input device 6 include a keyboard, a mouse, a touch panel, and a voice recognizer. The computing device 8 is typically a CPU. The display device 10 is typically a monitor. Specific examples of the storage device 12 include a hard disk and a RAM.

As shown in FIG. 1, the storage device 12 includes a social element storage section 14, a utility index storage section 16, a polymerization information storage section 18, and a polymerization ratio storage section 20.

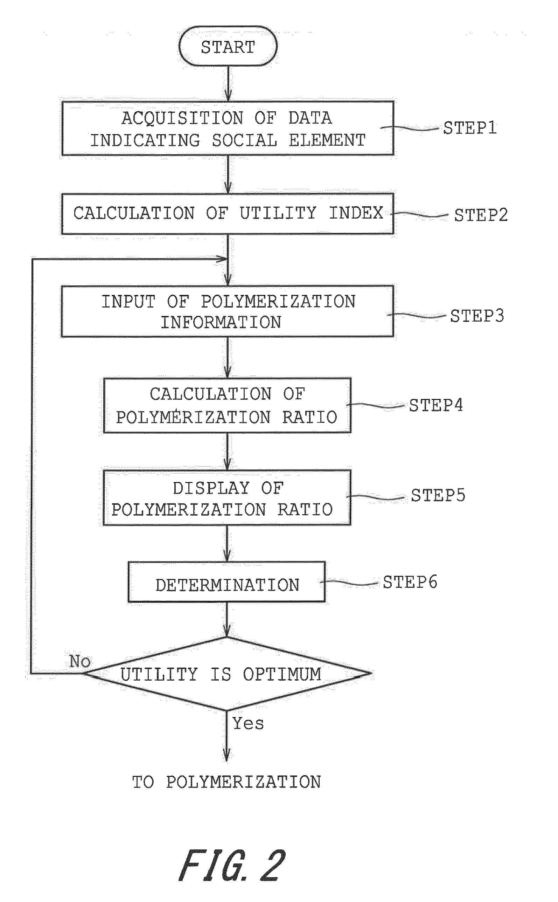

FIG. 2 is a flowchart showing a method for deciding a polymerization ratio by using the system 2 in FIG. 1. The method includes six steps of: acquisition of data indicating a social element (STEP 1); calculation of a utility index (STEP 2); input of polymerization information (STEP 3); calculation of a polymerization ratio (STEP 4); display of the polymerization ratio (STEP 5); and determination (STEP 6). The input of the polymerization information (STEP 3) may be performed prior to the calculation of the utility index (STEP 2). The input of the polymerization information (STEP 3) may be performed prior to the acquisition of the data (STEP 1).

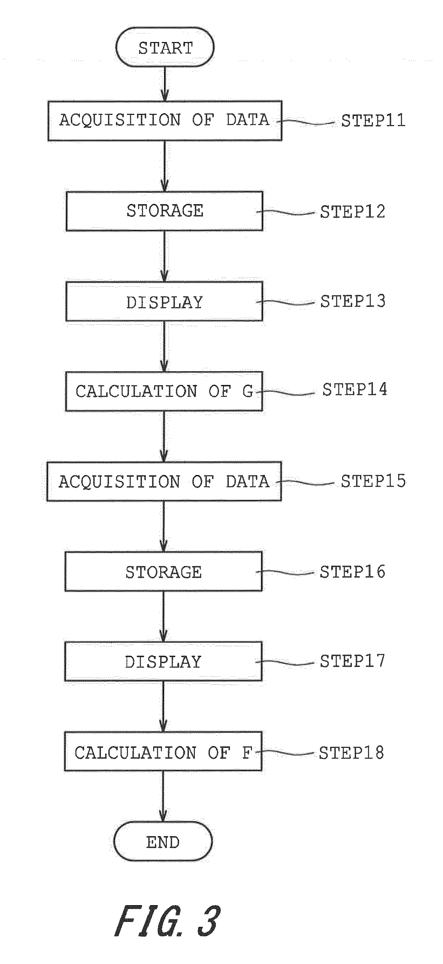

FIG. 3 shows the details of the step of acquisition of the data indicating the social element (STEP 1). The social element includes an element that influences the global environment, and an element that influences human dietary habits. In the present embodiment, data indicating a greenhouse gas concentration as a social element is acquired (STEP 11). The acquisition is performed by the computing device 8 via the network 4. The data indicating the greenhouse gas concentration can be acquired from the website (http://www.jma.go.jp/jma/index.html) of the Japan Meteorological Agency and the website (http://ds.data.jma.go.jp/gmd/wdcgg/jp/wdcgg_j.html) of the World Data Centre for Greenhouse Gases.

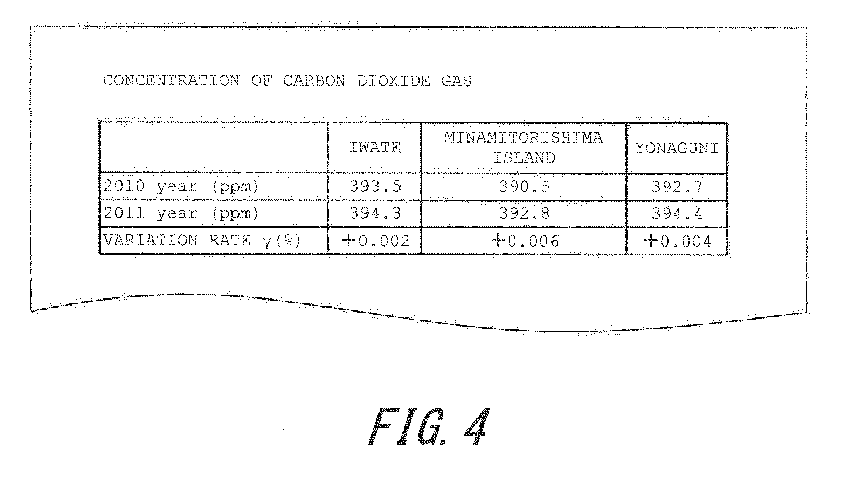

The data is stored in the social element storage section 14 of the storage device 12 (STEP 12). In addition, the data is displayed on the monitor (STEP 13). FIG. 4 shows a portion of a screen of the monitor. FIG. 4 shows variation rates $\gamma$ of concentrations of carbon dioxide gas.

On the basis of the data indicating the greenhouse gas concentration, the computing device 8 calculates a greenhouse gas variation index G (STEP 14). When the variation index G is calculated on the basis of a carbon dioxide gas concentration, the following mathematical formula (1) is used.

$$G = 1 + \gamma * \alpha \qquad (1)$$

In the mathematical formula (1), $\gamma$ is a concentration variation rate of carbon dioxide gas, and $\alpha$ is a coefficient representing a weight of the carbon dioxide gas concentration. The coefficient $\alpha$ can be arbitrarily set.

The greenhouse gas variation index G may be calculated on the basis of data indicating concentrations of a plurality of types of greenhouse gases. In this case, the following mathematical formula (2) is used.

$$G = 1 + \Sigma(\gamma m * GWP * CRm / CR * \alpha m) \qquad (2)$$

In the mathematical formula (2), $\gamma m$ is a concentration variation rate of the gas, GWP is a global warming coefficient (global warming potential) of the gas, CRm is a concentration of the gas, CR is a concentration of carbon dioxide gas, and $\alpha m$ is a coefficient representing a weight of the gas. A concentration of each greenhouse gas is converted into a concentration of carbon dioxide gas by the mathematical formula (2).

Specific examples of greenhouse gases include carbon dioxide gas, methane gas, dinitrogen monoxide gas, and chlorofluorocarbon gas. Gases that have a great effect on the global warming are carbon dioxide gas and methane gas.

GWP is defined, in "the Act on Promotion of Global Warming Countermeasures" of Japan, as a coefficient for each substance constituting a greenhouse gas which indicates that substance's effect on global warming as a ratio to that of carbon dioxide, specified by a Cabinet Order on the basis of internationally recognized knowledge. The GWPs of greenhouse gases are specified in "the Kyoto Protocol", "the Order for Enforcement of the Act on Promotion of Global Warming Countermeasures", "the report of the Intergovernmental Panel on Climate Change (IPCC)", and the like. For example, the GWP of carbon dioxide gas is 1, the GWP of methane gas is 21, and the GWP of dinitrogen monoxide is 310.

In the present embodiment, data indicating a food price is acquired as another social element (STEP 15). The acquisition is performed by the computing device 8 via the network 4. The data indicating the food price can be acquired from the website (http://www.fao.org/index_en.htm) of the Food and Agriculture Organization of the United Nations. In this website, food price indexes are released to the public.

The data is stored in the social element storage section 14 of the storage device 12 (STEP 16). In addition, the data is displayed on the monitor (STEP 17).

On the basis of the data indicating the food price, the computing device 8 calculates a food competition index F (STEP 18). When the competition index F is calculated on the basis of the price of corn, the following mathematical formula (3) is used.

$$F \ = \ P1 \ / \ P \ * \ \beta \quad (3)$$

In the mathematical formula (3), P1 is the current year's price of corn, P is the reference year's price of corn, and $\beta$ is a coefficient representing a weight of the price of corn. The coefficient $\beta$ can be decided on the basis of the significance of the situation surrounding food, the necessity to grapple with competition with food, and the like. The rate of increase in the global population or the rate of decrease in the area of the agricultural land may be reflected in the coefficient $\beta$.

On the basis of data indicating prices of a plurality of types of food, the food competition index F may be calculated. In this case, the following mathematical formula (4) is used.

$$F \ = \ \pi(P1n \ / \ Pn \ * \ \beta n) \quad (4)$$

In the mathematical formula (4), P1n is the current year's price of the food, Pn is the reference year's price of the food, and $\beta n$ is a coefficient representing a weight of the food.

On the basis of data indicating balance between demand and supply of food, the food competition index F may be calculated. On the basis of data indicating the yield of a crop, the food competition index F may be calculated. On the basis of data indicating the stockpile of a crop, the food competition index F may be calculated.

When a non-fossil resource-derived monomer that does not compete with food is used, the food competition index F is 1.0. Examples of raw materials for the non-fossil resource-derived monomer that does not compete with food include industrial waste, cellulose materials, and non-food seaweed and algae. Examples of the industrial waste include vegetable food waste, animal food waste, plant-based building waste, and residual biomass.

The calculation of the utility index (STEP 2) is performed by the computing device 8. The computing device 8 calculates a utility index E of the non-fossil resource-derived monomer on the basis of the following mathematical formula (5).

$$E \ = \ G \ / \ F \quad (5)$$

As is clear from this mathematical formula, the utility index E correlates with the greenhouse gas variation index G and correlates with the reciprocal of the food competition index F. The obtained utility index E is stored in the utility index storage section 16 of the storage device 12.

In the present embodiment, the utility index E is calculated on the basis of the greenhouse gas variation index G and the food competition index F. The utility index E may be calculated on the basis of only the greenhouse gas variation index G. The utility index E may be calculated on the basis of only the food competition index F.

In the present embodiment, the utility index E is calculated on the basis of the greenhouse gas concentration and the food price which are social elements. On the basis of another social element, the utility index E may be calculated. Examples of the other social element include the yield of food, the supply-demand situation of food, the global population, the area of the agricultural land, the proved reserve of petroleum, the minable duration of petroleum, the proved reserve of coal, the minable duration of coal, the temperature of the atmosphere, the temperature of the ocean, the height of the sea level, the remaining amount of the glacier, the area of the sea ice in the north polar region, the area of the sea ice in the south polar region, the volume of the ice sheet in the north polar region, and the volume of the ice sheet in the south polar region. A social element that is monitored over a long period of time and whose measurement value is periodically disclosed is preferred. On the basis of an estimate of a social element, the utility index E may be calculated. On the basis of a combination of a large number of social elements, the utility index E may be calculated.

In the input of the polymerization information (STEP 3), the polymerization information is inputted from the input device 6. In the present embodiment, an upper limit D of a budget, a total monomer amount A, a unit price b of the non-fossil resource-derived monomer, and a unit price c of the fossil resource-derived monomer are inputted. The inputted information is stored in the polymerization information storage section 18 of the storage device 12.

A material cost J for polymerization can be calculated on the basis of the following mathematical formula (6).

The calculation is performed by the computing device 8.

$$J = b * B + c * C \quad (6)$$

In this mathematical formula, b is the unit price of the non-fossil resource-derived monomer, B is an amount of the non-fossil resource-derived monomer, c is the unit price of the fossil resource-derived monomer, and C is an amount of the fossil resource-derived monomer. The amount B and the amount C meet the relationship shown by the following mathematical formula (7).

$$A = B + C \quad (7)$$

In this mathematical formula, A is the total monomer amount.

The calculation of the polymerization ratio (STEP 4) is performed by the computing device 8. In this step, a function shown by the following mathematical formula (8) is used.

$$K = (B * E + C) / A \quad (8)$$

In this mathematical formula, K represents utility. This function includes the total monomer amount A and the utility index E of the non-fossil resource-derived monomer as constants, and includes the amount B of the non-fossil resource-derived monomer and the amount C of the fossil resource-derived monomer as variables. The computing device 8 decides the amount B of the non-fossil resource-derived monomer and the amount C of the fossil resource-derived monomer such that the utility K is optimized (maximized) in a range where the cost J calculated on the basis of the above mathematical formula (6) does not exceed the upper limit D of the budget. In other words, the computing device 8 calculates a polymerization ratio. The obtained polymerization ratio is stored in the polymerization ratio storage section 20 of the storage device 12. In addition, the polymerization ratio is displayed on the monitor (STEP 5). According to need, the polymerization ratio is outputted by a printer or the like.

An operator determines whether the obtained utility is sufficient (STEP 6). When the utility is sufficient, polymerization is conducted at this polymerization ratio, and a polymer is manufactured. When the utility is not sufficient, a new value is inputted as polymerization information from the input device 6. For example, a value greater than the already-inputted value is inputted as an upper limit of the budget. On the basis of the new value, the computing device 8 calculates a new polymerization ratio.

In the above mathematical formula (8), the amount B of the non-fossil resource-derived monomer is multiplied by the utility index E. The amount C of the fossil resource-derived monomer may be multiplied by another utility index.

The main steps included in the present embodiment are summarized below.

(a) Acquisition of a social element by the computing device 8
(b) Storage of the social element by the storage device 12
(c) Calculation of a utility index by the computing device 8
(d) Storage of the utility index by the storage device 12
(e) Input of polymerization information by the input device 6
(f) Storage of the polymerization information by the storage device 12
(g) Calculation of a polymerization ratio by the computing device 8
(h) Storage of the polymerization ratio by the storage device 12

Any of the above steps (b), (d), (f), and (h) may be omitted.

A function shown by the following mathematical formula (9) may be used for the calculation of the polymerization ratio (STEP 4).

$$K' = K * H \quad (9)$$

In this mathematical formula, K' represents utility after correction, and H represents a correction coefficient. For example, when it is possible to receive preferential tax treatment because of using a specific non-fossil resource-derived monomer, a correction coefficient H corresponding to the degree of the preferential treatment can be used. An example of calculation of the correction coefficient is shown by the following mathematical formula (10).

$$H = CT / CT' \quad (10)$$

In this mathematical formula, CT is a monomer procurement cost in the case where there is no preferential treatment, and CT' is a monomer procurement cost in the case where there is preferential treatment. In this case, the correction coefficient is greater than 1.0. Other preferential treatment is a return by providing points.

A polymer may be obtained by polymerization of two or more non-fossil resource-derived monomers. In this case, calculation is performed on the basis of the following mathematical formulas (11), (12), and (13) instead of the above mathematical formulas (6), (7), and (8).

$$J = \Sigma(bn * Bn) + c * C \quad (11)$$

$$A = \Sigma Bn + C \quad (12)$$

$$K = (\Sigma(Bn * En) + C) / A \quad (13)$$

In these mathematical formulas, bn is a unit price of the non-fossil resource-derived monomer, Bn is an amount of the non-fossil resource-derived monomer, and En is a utility index of the non-fossil resource-derived monomer.

Various polymerization methods can be used for manufacturing a polymer. Specific examples of the polymerization methods include mass polymerization, solution polymerization, emulsion polymerization, and suspension polymerization.

Various polymers can be manufactured by the manufacturing method described above.

The above descriptions are merely illustrative examples, and various modifications can be made without departing from the principles of the present invention.

**Claims**

1. A method for manufacturing a polymer, the method comprising the steps of:

(1) deciding an upper limit of a budget;
(2) deciding an amount of a non-fossil resource-derived monomer and an amount of a fossil resource-derived monomer such that utility is optimized in a range where a cost does not exceed the upper limit, by using a function that includes a total monomer amount and a utility index of the non-fossil resource-derived monomer as constants and includes the amount of the non-fossil resource-derived monomer and the amount of the fossil resource-derived monomer as variables; and
(3) polymerizing the non-fossil resource-derived monomer and the fossil resource-derived monomer.

2. A method for manufacturing a polymer product, the method comprising the steps of:

(1) deciding an upper limit of a budget;
(2) deciding an amount of a non-fossil resource-derived monomer and an amount of a fossil resource-derived monomer such that utility is optimized in a range where a cost does not exceed the upper limit, by using a function that includes a total monomer amount and a utility index of the non-fossil resource-derived monomer as constants and includes the amount of the non-fossil resource-derived monomer and the amount of the fossil resource-derived monomer as variables;

(3) polymerizing the non-fossil resource-derived monomer and the fossil resource-derived monomer to obtain a polymer; and
(4) molding a molded article from a composition including the polymer.

3.  A system for deciding a polymerization ratio, the system comprising:

(1) an input device for inputting an upper limit of a budget and a total monomer amount; and
(2) a computing device for deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

4.  A method for deciding a polymerization ratio, the method comprising the steps of:

(1) inputting an upper limit of a budget and a total monomer amount from an input device; and
(2) a computing device deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

5.  A program for causing a computer to execute the steps of:

(1) inputting an upper limit of a budget and a total monomer amount from an input device; and
(2) a computing device deciding an amount of a non-fossil resource-derived monomer and an amount of a fossil resource-derived monomer such that utility is optimized in a range where a cost does not exceed the upper limit, by using a function that includes the total monomer amount and a utility index of the non-fossil resource-derived monomer as constants and includes the amount of the non-fossil resource-derived monomer and the amount of the fossil resource-derived monomer as variables.

*FIG. 1*

START

ACQUISITION OF DATA
INDICATING SOCIAL ELEMENT — STEP1

CALCULATION OF UTILITY INDEX — STEP2

INPUT OF POLYMERIZATION
INFORMATION — STEP3

CALCULATION OF
POLYMERIZATION RATIO — STEP4

DISPLAY OF
POLYMERIZATION RATIO — STEP5

DETERMINATION — STEP6

No — UTILITY IS OPTIMUM

Yes

TO POLYMERIZATION

*FIG. 2*

START

ACQUISITION OF DATA —— STEP11

STORAGE —— STEP12

DISPLAY —— STEP13

CALCULATION OF G —— STEP14

ACQUISITION OF DATA —— STEP15

STORAGE —— STEP16

DISPLAY —— STEP17

CALCULATION OF F —— STEP18

END

*FIG. 3*

CONCENTRATION OF CARBON DIOXIDE GAS

| | IWATE | MINAMITORISHIMA ISLAND | YONAGUNI |
|---|---|---|---|
| 2010 year (ppm) | 393.5 | 390.5 | 392.7 |
| 2011 year (ppm) | 394.3 | 392.8 | 394.4 |
| VARIATION RATE $\gamma$(%) | +0.002 | +0.006 | +0.004 |

*FIG. 4*

EP 2 755 174 A1

| | Europäisches Patentamt European Patent Office Office européen des brevets | **EUROPEAN SEARCH REPORT** | Application Number EP 13 19 4543 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/027002 A1 (VOLVO AERO CORP [SE]; UNIV SOUTHAMPTON [GB]; OLSEN TOR-MORTEN OEVERBY) 24 March 2005 (2005-03-24) * the whole document * ----- | 1-5 | INV. G06Q10/06 |

TECHNICAL FIELDS SEARCHED (IPC)

G06Q

The present search report has been drawn up for all claims

| Place of search | Date of completion of the search | Examiner |
|---|---|---|
| Munich | 23 May 2014 | Gardiner, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 4543

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2014

| Patent document cited in search report | Publication date | Patent family member(s) | | Publication date |
|---|---|---|---|---|
| WO 2005027002 A1 | 24-03-2005 | AT | 417696 T | 15-01-2009 |
| | | CA | 2534986 A1 | 24-03-2005 |
| | | EP | 1665146 A1 | 07-06-2006 |
| | | ES | 2321196 T3 | 03-06-2009 |
| | | JP | 5248773 B2 | 31-07-2013 |
| | | JP | 2007534038 A | 22-11-2007 |
| | | US | 2007043622 A1 | 22-02-2007 |
| | | WO | 2005027002 A1 | 24-03-2005 |

EPO FORM P0459

For more details about this annex : see Official Journal of the European Patent Office, No. 12/82

**REFERENCES CITED IN THE DESCRIPTION**

**Patent documents cited in the description**

- JP 2012270187 A
- JP 2003063206 A
- US 20030100661 A
- US 20050236084 A
- US 20070240610 A
- WO 2012051503 A